# FASCICULE DE BREVET EUROPEEN

(11) **EP 3 140 031 B1**
(45) Date de publication et mention de la délivrance du brevet: **20.02.2019**
(21) Numéro de dépôt: 15725806.2
(22) Date de dépôt: 27.04.2015
(51) Int. Cl.: B01J 8/24, B05B 7/00

(54) **DISPOSITIF D'INJECTION CONVENANT À INJECTER UNE CHARGE D'HYDROCARBURES DANS UNE UNITÉ DE RAFFINAGE ET PROCÉDÉ.**
INJEKTIONSVORRICHTUNG GEEIGNET ZUM INJIZIEREN EINES KOHLENWASSERSTOFFAUSGANGSMATERIALS IN EINE RAFFINIEREINHEIT UND VERFAHREN.
INJECTION DEVICE SUITABLE FOR INJECTING A HYDROCARBON FEEDSTOCK INTO A REFINING UNIT AND PROCESS.

(30) Priorité: 05.05.2014 FR 1454036
(43) Date de publication de la demande: 15.03.2017
(73) Titulaire: Total Raffinage Chimie, 92400 Courbevoie (FR)
(72) Inventeur: LESAGE, Romain, 76290 Montivilliers (FR)
(74) Mandataire: Raboin, Jean-Christophe
(86) Numéro de dépôt international: PCT/FR2015/051132
(87) Numéro de publication internationale: WO 2015/170034

(56) Documents cités:
- EP-A2- 0 546 739
- GB-A- 473 471
- US-A- 5 921 472
- US-A1- 2013 145 683
- US-A1- 2014 091 160

## Description

La présente invention se rapporte à un dispositif d'injection, convenant à l'injection de charge d'hydrocarbures d'une unité de raffinage, en particulier une unité de craquage catalytique fluide (FCC « Fluid Catalytic Cracking » en anglais).

Les charges d'hydrocarbures liquides traitées dans les unités de raffinage sont généralement mises en contact avec un catalyseur solide qui va favoriser la ou les réactions chimiques de traitement de la charge. Afin d'améliorer ce contact et de maximiser le rendement des réactions, ces charges d'hydrocarbures liquides sont atomisées en fines gouttelettes par des dispositifs d'injection. Cette d'atomisation permet de maximiser la surface de contact liquide (charge d'hydrocarbures liquide) -solide (catalyseur), ce qui favorise le transfert de chaleur et contribue à la répartition homogène des hydrocarbures à l'intérieur de la zone réactionnelle. Bien qu'il n'existe pas de réel consensus concernant le diamètre optimum des gouttelettes, on recherche en général à former des gouttelettes dont le diamètre est du même ordre de grandeur que le diamètre des particules de catalyseur, à savoir moins de 200 microns, par exemple de l'ordre de 50 à 80 microns.

De manière générale, on utilise des dispositifs d'injection dits « diphasiques », lesquels présentent un corps cylindrique creux et deux ouvertures d'entrée par lesquelles on injecte respectivement la charge d'hydrocarbures liquide et un gaz d'atomisation, généralement de la vapeur d'eau, à l'intérieur dudit corps. Une chambre de contact est ménagée à l'intérieur du corps, dans laquelle on met en contact la charge d'hydrocarbures et le gaz d'atomisation pour atomiser la charge d'hydrocarbures. Une fois atomisée, la charge d'hydrocarbures est éjectée via une ouverture de sortie débouchant à l'intérieur du réacteur. Chaque dispositif d'injection est implanté sur une paroi de réacteur de manière à ce qu'une extrémité du dispositif d'injection comprenant l'ouverture de sortie soit située à l'intérieur du réacteur. On connait notamment des dispositifs d'injection à impaction dans lesquels la charge est introduite radialement et impacte une cible située au centre du corps, engendrant la formation de gouttelettes. Un gaz d'atomisation circulant axialement permet d'entrainer ces gouttelettes en les divisant davantage vers la sortie du corps. De tels dispositifs d'injection sont cependant complexes et coûteux à réaliser. En outre, on peut observer un problème d'érosion de la cible, notamment lorsque la charge à injecter contient des particules, ce qui implique de renforcer la cible, augmentant davantage le coût. Par ailleurs, des problèmes de rupture de la soudure liant la cible avec sa bride de support ont été observés en service, contraignant à fabriquer la cible et la bride en une seule pièce massive, ce qui renchérit le coût de fabrication.

Des charges de plus en plus lourdes sont actuellement traitées dans les unités de raffinage et tout particulièrement dans les unités FCC. L'atomisation de charges lourdes entraine une perte de charge importante au niveau des injecteurs, ce qui a pour conséquence d'augmenter la pression de la charge alimentant les injecteurs. Il faut alors utiliser des pompes puissantes et coûteuses pour atteindre les pressions souhaitées en sortie d'injecteur. Selon les configurations des dispositifs d'injection diphasiques, il peut en outre s'avérer nécessaire d'augmenter de manière considérable le débit de gaz d'atomisation pour atomiser des charges lourdes. Toutefois, injecter des quantités plus importantes de gaz d'atomisation augmente le coût global du traitement et peut en outre avoir un impact négatif sur le rendement des réactions en induisant des réactions parallèles non souhaitées, notamment lorsque le gaz d'atomisation est de la vapeur d'eau. C'est ainsi le cas lorsque de grandes quantités de vapeur d'eau sont injectées dans les réacteurs FCC. Il est donc préférable de ne pas augmenter le débit de gaz d'atomisation. En outre, l'injection de grandes quantités de vapeur d'eau nécessite un surdimensionnement des unités de séparation des effluents en aval de l'unité FCC, notamment pour condenser la vapeur d'eau, ce qui accroit les coûts de fabrication.

L'utilisation moindre de vapeur d'eau pour atomiser la charge permet de mieux gérer la répartition des flux de vapeur d'eau et de pouvoir en apporter un surplus dans des zones sensibles de l'unité FCC, par exemple dans les vannes où circulent du catalyseur ou encore pour accroitre la quantité de gaz de fluidisation en pied de riser (« gas lift ») pour faciliter la circulation du catalyseur.

Enfin, s'il est possible de travailler à plus basse pression, il est alors possible de diminuer les épaisseurs de métal lors de la fabrication des trains de préchauffe de la charge, donc de réduire les coûts de fabrication. EP-A-0 546 739 décrit un procédé d'atomisation de charges lourdes dans un réacteur FCC.

Il existe donc un besoin pour des dispositifs d'injection qui ne provoquent qu'une faible chute de la pression d'injection, permettant leur utilisation avec des charges lourdes sans avoir à augmenter le débit de gaz d'atomisation, ni la puissance des pompes utilisées.

L'invention vise à pallier au moins en partie les inconvénients mentionnés ci-dessus. A cet effet, il est proposé un dispositif d'injection conformé pour atomiser un liquide en gouttelettes au moyen d'un gaz selon la revendication 1.

Par « ligne axiale », on entend une ligne qui s'étend parallèlement à la direction axiale du corps du dispositif d'injection.

Un axe d'un conduit d'entrée au sens de l'invention peut être défini en référence à une courbe équidistante dont chaque point s'étend à équidistance des parois latérales d'un conduit d'entrée, à l'intérieur de ce dernier. L'axe du conduit d'entrée est alors confondu avec cette courbe équidistante lorsque le conduit d'entrée est rectiligne, la courbe équidistante étant alors une droite. Lorsque le conduit d'entrée présente une symétrie axiale, l'axe du conduit d'entrée correspond alors à son axe de symétrie. Lorsque le conduit d'entrée est courbe, la courbe équidistante est également courbe. L'axe du conduit d'entrée correspond alors à la tangente à cette courbe équidistante au niveau de l'ouverture du conduit d'entrée dans la conduite interne, autrement dit au niveau où le conduit d'entrée débouche dans la conduite interne. Ainsi, de manière générale, l'axe du conduit d'entrée correspond à la direction du flux de liquide lorsqu'il sort du conduit d'entrée de liquide. Les conduits d'entrée préférés sont de forme cylindrique et/ou tronconique, et ont alors un axe de symétrie.

Du fait de l'agencement particulier des conduits d'entrée de liquide du dispositif d'injection selon l'invention, les jets de liquide introduits par ces conduits d'entrée s'impactent les uns contre les autres. De manière surprenante, bien que ces impacts n'aient pas lieu contre une cible solide, ils s'avèrent suffisants pour obtenir la formation de gouttelettes, lesquelles sont ensuite balayées par le gaz circulant suivant la direction axiale dans la conduite interne, augmentant le fractionnement des gouttelettes. En outre, une faible perte de charge est observée entre l'entrée et la sortie du dispositif d'injection. Il est ainsi possible de traiter des charges lourdes sans avoir à utiliser des pompes puissantes et coûteuses et sans avoir à augmenter le débit de gaz.

Avantageusement, les conduits d'entrée de liquide peuvent être situés à proximité immédiate de l'orifice d'entrée de gaz afin de permettre un balayage immédiat des gouttelettes formées par l'impact des jets de fluide sortant des conduits d'entrée de liquide.

Avantageusement, les conduits d'entrée de liquide peuvent être répartis régulièrement sur la périphérie de la conduite interne.

Avantageusement et de manière non limitative, les axes des conduits d'entrée peuvent se couper sur une ligne axiale centrale du corps, notamment sur un axe de symétrie dudit corps. Ceci peut permettre d'améliorer l'efficacité du dispositif d'injection en positionnant le point d'impact des jets de fluide en regard de l'orifice d'entrée, généralement centré sur l'axe de symétrie du corps.

Les conduits d'entrée de liquide traversent le corps du dispositif d'injection radialement ou sensiblement radialement. Par « radiale », on entend une direction qui s'étend perpendiculairement à la direction axiale dans laquelle s'étend le corps. Lorsque l'axe d'un conduit d'entrée est sensiblement radial, on considère qu'il peut être légèrement incliné par rapport à une direction radiale, par exemple d'au plus 20°, voire d'au plus 10°, de préférence d'au plus 5°.

Toutefois, afin d'améliorer l'efficacité du dispositif d'injection et de faciliter sa réalisation, l'axe de chaque conduit d'entrée de liquide peut avantageusement s'étendre perpendiculairement à la direction axiale dudit corps. Avantageusement, les axes de tous les conduits d'entrée peuvent ainsi s'étendre dans un seul et même plan radial. Les axes de deux conduits d'entrée peuvent alors être confondus lorsque ces conduits se font face. En fonction de l'environnement disponible, on peut cependant envisager des conduits d'entrée dont certains (au moins deux) ont leur axe dans un même plan radial et d'autres (au moins deux) ont leur axe dans un autre plan radial distinct.

Le nombre de conduits d'entrée de liquide peut être variable. Deux conduits d'entrée, lesquels sont alors de préférence situés en regard l'un de l'autre, leurs axes s'étendant dans un même plan radial, suffisent cependant pour obtenir la pulvérisation du liquide en gouttelettes. La réalisation de seulement deux conduits d'entrée peut en outre faciliter la réalisation d'un injecteur selon l'invention.

On peut toutefois envisager un nombre plus important de conduits d'entrée en fonction des dimensions de l'injecteur.

Le nombre de conduits d'entrée de liquide peut être un nombre pair. Dans ce cas, les conduits d'entrée sont appariés en paires, les axes de deux conduits d'une même paire s'étendant dans un même plan contenant la ligne axiale. Deux conduits d'entrée appariés étant de préférence disposés en regard l'un de l'autre.

Il peut alors être avantageux que les conduits d'entrée de liquide appariés présentent une section de même surface. Ceci peut permettre d'éviter d'avoir à contrôler les débits et/ou vitesse de liquide de chaque conduit d'entrée pour positionner le point d'impact des jets de liquide sensiblement au centre du corps, position a priori optimale pour l'entraînement des gouttelettes par le gaz entrant dans le corps par l'orifice d'entrée. Toutefois, deux conduits d'entrée appariés peuvent présenter une section de même surface, mais différente de la surface d'une section de deux autres conduits d'entrée appariés.

Il peut cependant être plus simple que tous les conduits d'entrée présentent une section de même surface, notamment des sections identiques.

Le nombre de conduits d'entrée de liquide peut également être un nombre impair, par exemple au moins trois. Dans ce cas, les conduits d'entrée sont de préférence répartis régulièrement sur la périphérie du corps.

Il peut être préférable que tous les conduits d'entrée de liquide présentent une section de même surface, notamment des sections identiques, afin d'éviter un contrôle des débits et/ou vitesse de liquide pour positionner le point d'impact des jets de liquide au centre du corps.

Les conduits d'entrée de liquide font saillie à l'intérieur de la conduite interne. Ceci peut permettre d'éviter la formation d'un écoulement de liquide le long des parois internes du corps du dispositif d'injection. En outre, on observe une meilleure atomisation du liquide. En particulier, par rapport à un mode de réalisation dans lequel les conduits d'entrée de liquide ne font pas saillie à l'intérieur de la conduite interne, pour des débits de gaz et liquide identiques, un dispositif d'injection présentant des conduits d'entrée de liquide saillant à l'intérieur de la conduite interne permet une meilleur atomisation, sans variation significative de la perte de charge entre l'entrée et la sortie du dispositif d'injection. A titre d'exemple, les conduits d'entrée de liquide peuvent faire saillie d'une distance prédéterminée, notamment de quelques millimètres à quelques centimètres, par exemple de 4 à 20mm. La prolongation des conduits de liquide à l'intérieur permet de guider le flux de liquide de chacun des conduits d'entrée de liquide de façon à ce que lesdits flux entrent en collision de la manière la plus efficace possible.

Chaque conduit d'entrée de liquide peut être relié directement à une conduite d'alimentation en liquide. Dans ce cas, il peut être préférable de limiter le nombre de conduits d'entrée de liquide, par exemple à deux, notamment lorsque l'espace disponible autour du dispositif d'injection est réduit.

Afin de permettre un positionnement du dispositif d'injection dans un environnement contraint, il peut alors être avantageux de prévoir une chambre externe au corps et coaxiale avec celui-ci, agencée de sorte que lesdits conduits d'entrée de liquide soient en communication de fluide avec ladite chambre externe. Il est alors possible de relier cette chambre externe à une ou plusieurs conduites d'alimentation en liquide selon la place disponible. Ainsi, lorsque l'espace est très restreint, la chambre externe peut être reliée à une seule conduite d'alimentation en liquide. Ceci peut en outre permettre d'éviter une modification de l'unité dans laquelle doit être installée le dispositif d'injection selon l'invention, de telles unités comprenant en général une unique conduite d'alimentation en liquide pour chaque dispositif d'injection.

Cette chambre externe peut avantageusement être conformée pour que le liquide soit réparti équitablement entre les différents conduits d'entrée de liquide.

Ladite au moins une conduite d'alimentation peut être positionnée perpendiculairement ou sensiblement perpendiculairement à la ligne axiale.

On peut également prévoir de positionner ladite au moins une conduite d'alimentation en liquide tangentiellement à ladite chambre externe, autrement tangentiellement dit à sa paroi. Ceci peut permettre de maintenir une vitesse sensiblement constante du liquide dans tout le volume interne de la chambre externe.

La chambre externe peut présenter une forme à symétrie de révolution, par exemple une forme cylindrique, le corps du dispositif d'injection présentant également une section cylindrique.

L'invention concerne également un réacteur de traitement d'une charge d'hydrocarbures, notamment de craquage catalytique, comprenant au moins un dispositif d'injection selon l'invention disposé de sorte que son orifice de sortie débouche à l'intérieur dudit réacteur.

L'invention concerne en outre un procédé de craquage catalytique d'une charge d'hydrocarbures dans au moins un réacteur, dans lequel on injecte, de préférence en continu, la charge d'hydrocarbures à l'intérieur dudit au moins un réacteur, ladite charge d'hydrocarbures étant injectée par les conduits d'entrée de liquide d'au moins un dispositif d'injection selon l'invention, un gaz alimentant simultanément chaque dispositif d'injection par l'orifice d'entrée de gaz.

La charge d'hydrocarbures est de manière habituelle injectée au moins en partie à l'état liquide, à une température allant de la température ambiante à 500°C, par exemple de 80°C à 300°C, mais plus généralement de 200 à 300°C. La charge d'hydrocarbures peut être injectée à une pression de l'ordre de 4 à 8 bars en amont de l'injecteur. De manière générale, la différence de pression de la charge entre l'entrée et la sortie de l'injecteur selon l'invention est comprise entre 1 et 10 bars, de préférence entre 2 et 5 bars, alors que dans le cas d'injecteurs à impact selon l'état de la technique, il est nécessaire de doubler la différence de pression entre l'entrée et la sortie pour obtenir la même qualité de nébulisation.

Le gaz utilisé peut être de la vapeur d'eau, ou tout autre gaz approprié, tel que par exemple un effluent gazeux résultant de la conversion d'hydrocarbures, des oléfines légères ou un mélange de ces gaz.

Avantageusement, dans chaque dispositif d'injection, la proportion de gaz par rapport à la charge d'hydrocarbures peut être de 1,5 à 5% en poids, par exemple de 2 à 4% en poids.

Les débits en charge d'hydrocarbures et en gaz alimentant chaque dispositif d'injection peuvent avantageusement être contrôlés de manière à obtenir un débit de charge d'hydrocarbures en sortie de chaque dispositif d'injection allant de 15 à 80t/h, de préférence de 40 à 60t/h. Ce contrôle peut être obtenu de manière classique au moyen de pompes, débitmètres ou autre.

La vitesse de la charge d'hydrocarbures en sortie d'un conduit d'entrée de liquide d'un dispositif d'injection peut être de 10 à 40m/s, par exemple idéalement de 15m/s.

La perte de charge du gaz entrant par l'orifice d'entrée d'un dispositif d'injection peut être de 60% à 110% de la perte de charge correspondant à un régime d'écoulement critique, et peut être de 80% à 100%, par exemple de 90%.

L'invention est maintenant décrite en référence aux dessins annexés, non limitatifs, dans lesquels :
- la figure 1 représente une vue en coupe axiale d'un dispositif d'injection selon un mode de réalisation ;
- la figure 2 représente une vue en coupe axiale d'un dispositif d'injection selon un autre mode de réalisation ;
- les figures 3a et 3b sont des photographies des sprays obtenus respectivement avec un dispositif d'injection à impact classique et avec un dispositif d'injection selon le mode de réalisation de la figure 1 ;
- la figure 4 est un graphe représentant la distribution de la taille moyenne de gouttelettes en fonction de l'angle de spray à une distance relative de l'orifice de sortie, pour un dispositif d'injection à impact classique (référence) et pour un dispositif d'injection selon le mode de réalisation de la figure 1 en fonction de la distance à l'axe d'évacuation (axe X de la figure 1) ;

Par sensiblement parallèle, perpendiculaire, on entend une direction s'écartant d'au plus ±20°, voire d'au plus 10° ou d'au plus 5° d'une direction parallèle, perpendiculaire.

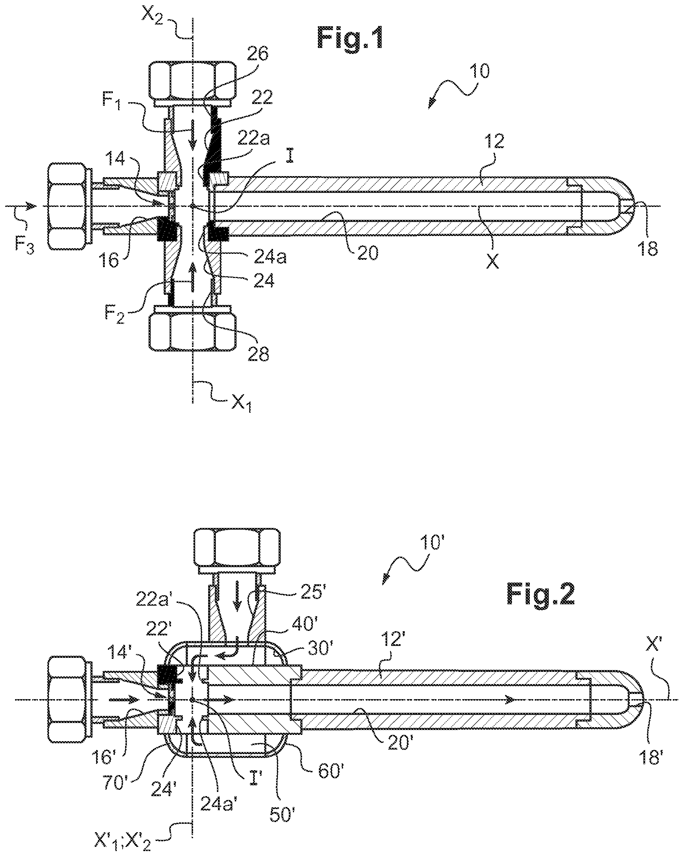

La figure 1 représente un dispositif d'injection 10 conformé pour atomiser un liquide en gouttelettes au moyen d'un gaz. Ce dispositif d'injection 10 comprend un corps 12 présentant :
- un orifice d'entrée des gaz 14 raccordé à un conduit d'alimentation 16 en gaz,
- un orifice de sortie 18 pour l'évacuation du liquide atomisé,
- une conduite interne 20 rectiligne reliant l'orifice d'entrée 14 à l'orifice de sortie 18 suivant une direction axiale X du corps 12.

La conduite interne 20 forme une zone de mélange du gaz et du liquide atomisé. Elle présente usuellement une forme cylindrique, de même que le corps 12, comme dans le présent exemple.

De manière usuelle, le dispositif d'injection 10 peut être réalisé en une ou plusieurs parties, en acier, notamment inoxydable, ou autre.

Ce dispositif d'injection 10 comprend au moins deux conduits d'entrée du liquide destinés à être raccordés à au moins un conduit d'alimentation en liquide. Ces conduits d'entrée de liquide traversent le corps 12 radialement ou sensiblement radialement, et débouchent à l'intérieur de la conduite interne 20. Ils présentent chacun un axe et sont agencés de sorte que ces axes se coupent en un seul et même point sur une ligne axiale s'étendant à l'intérieur de la conduite interne.

Dans l'exemple représenté figure 1, le dispositif d'injection 10 comprend deux conduits d'entrée de liquide 22 et 24 raccordés chacun à un conduit d'alimentation en liquide 26, 28 respectivement. Les deux conduits, 22, 24 présentent chacun un axe X₁, X₂, lesquels sont ici confondus. La ligne axiale est confondue avec la direction axiale X, laquelle forme ici un axe de symétrie du corps 12 et de la conduite interne 20. Les axes X₁, X₂ coupent ainsi la ligne axiale X en un point I.

Les dimensions internes du dispositif d'injection représenté sur la figure 1 sont similaires aux dimensions utilisées habituellement pour des dispositifs d'injection à impact avec une cible dont la surface s'étend dans un plan contenant la ligne axiale X. A titre d'exemple, le diamètre interne des ouvertures 22a, 24a, et de l'orifice d'entrée 14, usuellement de forme circulaire comme dans l'exemple représenté, sont de l'ordre de un pouce, soit d'environ 2,5cm. Le diamètre intérieur de la conduite interne 20 peut être de l'ordre de trois à six pouces, autrement dit de l'ordre de 7 à 16cm, voire éventuellement atteindre huit pouces, soit environ 20 cm. Tel que visible sur la figure 1, le conduit 16 d'alimentation en gaz présente une forme convergente, ici conique, suivant la direction de circulation du gaz, permettant d'accélérer les gaz à leur entrée dans la conduite interne 20 du corps 12. De manière similaire, les conduits d'entrée 22, 24 débouchent dans la conduite interne 20 par des ouvertures 22a, 24a, respectivement, lesquelles présentent une section de surface réduite par rapport à la surface des sections de ces conduits, également pour induire une accélération de la charge d'hydrocarbures lorsqu'elle entre à l'intérieur de la conduite interne 20. Ici, les conduits d'entrée 22, 24 présentent une forme conique, leurs ouvertures 22a, 24a étant circulaires.

On notera en outre, que les conduits d'entrée 22, 24 sont disposés à proximité immédiate de l'orifice d'entrée 14 du corps 12. Ceci correspond à la position habituelle du conduit d'entrée dans un dispositif d'injection 20 à impact, avec une cible solide, et permet un bon entrainement des gouttelettes formées par le gaz.

L'extrémité du dispositif d'injection 10 par laquelle sort le spray de liquide atomisé est généralement arrondie, par exemple sphérique. L'orifice de sortie 18 de cette extrémité peut présenter une forme similaire aux formes des dispositifs d'injection à impact classiques et peut être choisi en fonction de la forme de spray recherché. Il peut s'agir d'un orifice cylindrique, tronconique, d'une fente, ...

Le dispositif d'injection 10 représenté sur la figure 1 fonctionne de la manière suivante : la charge d'hydrocarbures est injectée via les conduits 22 et 24 à l'intérieur de la conduite interne 20 du corps 12 suivant les directions des flèches F1, F2 respectivement. Un gaz d'atomisation est quant à lui introduit dans la conduite interne 20 par la conduite 16 puis l'orifice d'entrée 14 suivant la direction de la flèche F3. Les deux jets de charge d'hydrocarbures issus des conduits 22 et 24 entrent en contact l'un avec l'autre au niveau du centre de la conduite interne sensiblement sur la ligne axiale X induisant ainsi la formation de gouttelettes. Ces gouttelettes sont entraînées par le gaz circulant dans la direction F3 jusqu'à l'orifice de sortie 18 du dispositif d'injection 10. Dans la zone de la conduite interne 20 située en aval du point I d'impact des jets, les gouttelettes de la charge d'hydrocarbures finissent de se mélanger avec le gaz de manière homogène avant leur sortie par l'orifice de sortie 18.

Dans l'exemple représenté sur la figure 1, les conduits d'entrée 22, 24, sont ainsi reliés à deux conduits d'alimentation distincts de la charge d'hydrocarbures. Lorsque l'environnement du dispositif d'injection est restreint, cet agencement peut se révéler encombrant. Il peut alors être avantageux de réaliser un dispositif d'injection tel que représenté sur la figure 2.

Le mode de réalisation représenté sur la figure 2 diffère de celui représenté sur la figure 1 essentiellement par l'alimentation en charges d'hydrocarbures des conduits d'entrée. Les mêmes éléments sont désignés par les mêmes références accolées d'un prime « ' ».

Sur la figure 2, un dispositif d'injection 10' comprend également un corps 12' comprenant une ouverture d'entrée 14', une ouverture de sortie 18', et deux conduits d'entrée 22'; 24', respectivement. De manière similaire au précédent mode de réalisation, un conduit d'alimentation en gaz 16' est relié à l'ouverture d'entrée 14'. En revanche, les conduits d'entrée de liquide 22' et 24' ne sont plus reliés chacun à un conduit d'alimentation mais sont en communication de fluide avec une chambre externe 30', laquelle entoure de manière coaxiale le corps 12' du dispositif d'injection 10'. Ici, la chambre externe 30' présente une section de forme annulaire, le corps 12' présentant une forme cylindrique. Les conduits d'entrée 22', 24' sont disposés symétriquement en vis-à-vis, leurs axes X'₁, X'₂ étant confondus et coupant la ligne axiale X' en un point I'.

La chambre externe 30' est elle-même en communication de fluide avec un conduit d'alimentation unique 25'. Cette chambre externe 30' peut être conformée pour que le liquide soit réparti équitablement entre les deux orifices d'entrée 22' et 24'. Par exemple, et selon un premier mode de réalisation, une répartition équitable entre les deux orifices d'entrée 22' et 24' peut être obtenue lorsqu'ils sont disposés à équidistance de la conduite d'alimentation en liquide 25'. Une méthode selon un second mode de réalisation consiste à déporter latéralement la conduite 25' de sorte qu'elle débouche dans la chambre externe 30' vers une des extrémités 60' ou 70', ladite chambre externe 30' prenant la forme d'une enceinte de répartition 50' agencée de sorte que le flux issu de la conduite d'alimentation en liquide 25' soit forcé de passer le long d'une paroi 40' avant de traverser les conduits d'entrée 22', 24' disposés à l'autre des extrémités 70' ou 60'.

Ce conduit d'alimentation en liquide 25' présente une forme similaire aux conduits d'entrée 22, 24 de l'exemple précédent, à savoir une forme conique dont la section diminue dans la direction de circulation des fluides. De leur côté, les conduits d'entrée 22', 24' débouchent au niveau d'une ouverture 22'a, 24'a respectivement dans la conduite interne 20'. Ces ouvertures 22'a, 24'a présentent ici une section inférieure à la section des conduits 22', 24' respectivement. Toutefois, ces sections pourraient être de mêmes dimensions que les conduits 22', 24'. Ici, les conduits 22' et 24' sont de forme cylindrique, les ouvertures 22'a, 24'a étant circulaires.

Dans les différents modes de réalisation représentés en référence aux figures 1 et 2, les sections des ouvertures 22a, 24a ou 22'a, 24'a sont de même surface, ici identiques.

Le fonctionnement du dispositif d'injection représenté figure 2 est similaire à celui du dispositif d'injection de la figure 1, les flèches représentées montrant les sens de circulation des différents fluides.

L'invention n'est pas limitée aux modes de réalisation décrits, ni aux formes particulières décrites dans ces modes de réalisation. Plus de deux conduits d'entrée peuvent notamment être envisagés, par exemple trois répartis régulièrement, ou plus, par exemple 4 ou plus selon les dimensions du dispositif d'injection et les dimensions souhaitées des sections des conduits d'entrée.

### EXEMPLE :

Un dispositif d'injection similaire à celui décrit en référence à la figure 1 a été testé pour l'atomisation d'eau, le gaz étant de l'air. Le dispositif testé a été réalisé avec des dimensions telles que le diamètre de la conduite interne est 10 fois plus faible que le diamètre d'un dispositif habituellement utilisé pour une application dans un réacteur de craquage catalytique.

Le dispositif d'injection testé présente les dimensions suivantes :
- diamètre de l'ouverture débouchant dans la conduite interne pour l'injection du liquide : 1, 56 mm,
- diamètre de l'ouverture débouchant dans la conduite interne pour l'injection du gaz: 1, 58 mm
- diamètre de la conduite interne : 8 mm,
- longueur de la conduite interne : 132,5 mm
- orifice de sortie : fente d'épaisseur 2,52 mm et d'amplitude angulaire d'ouverture de 105° (fente réalisée sur une extrémité sphérique de rayon externe de 5,6mm).

Un dispositif d'injection à impact classique de mêmes dimensions a également été testé. Ce dispositif d'injection à impact classique présente un seul conduit d'entrée de liquide et une cible solide dont la surface d'impact contenant la ligne axiale X est située en regard du conduit d'entrée de liquide. Un tel dispositif d'injection à impact classique est semblable à celui représenté dans le brevet US4434049, avec cependant un orifice de sortie de forme différente.

Les conditions de test sont les suivantes :
- Débit d'eau : 226, 2 kg/h,
- Débit de l'air : 6,1 kg/h,
- Vitesse du gaz au niveau de l'orifice d'entrée : 300m/s,
- Vitesse de l'eau au niveau de l'ouverture 22a, 24a : 15m/s,
- Ratio gaz/liquide : 2, 7% en poids.

### Forme du spray obtenu

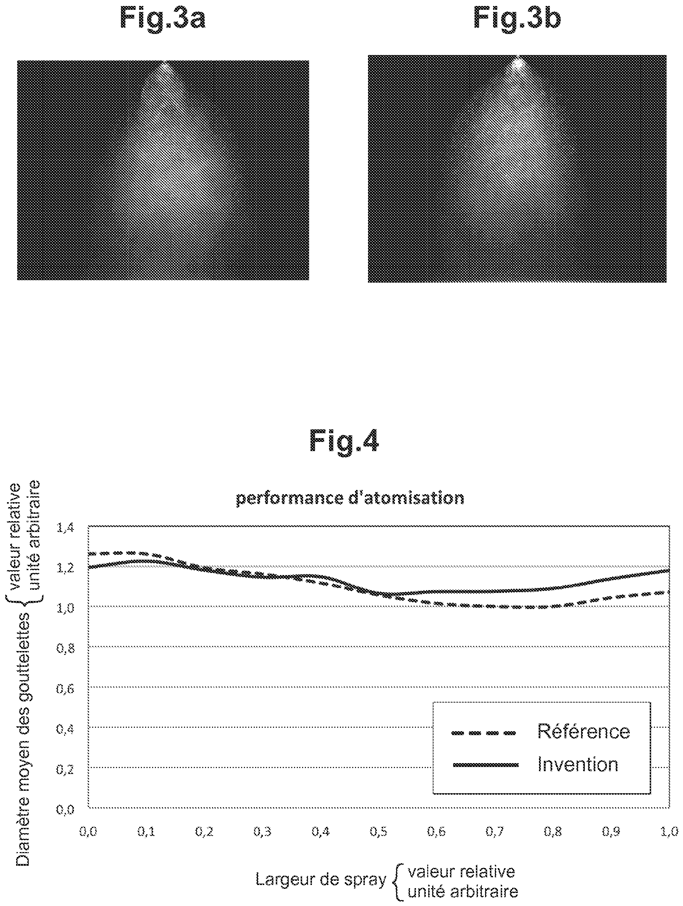

Les figures 3a, 3b représentent des images des sprays de liquide atomisé sortant de chacun des dispositifs d'injection. Ces images sont enregistrées sur un fond noir par illumination directe à l'aide d'un stroboscope. On observe que les sprays obtenus présentent des formes similaires, le spray obtenu avec le dispositif selon la figure 1 semble toutefois plus dense.

### Mesure de la perte de charge

Les dispositifs d'injection testés diffusent dans de l'air ambiant. Par conséquent, la pression relative de liquide à l'entrée est égale à la chute de pression. La mesure a été effectuée au moyen d'un manomètre mesurant la pression en entrée. La pression relative de liquide à l'entrée est mesurée à 10 barg pour le dispositif d'injection à impact classique. Cette valeur est légèrement supérieure à la valeur estimée par calcul (8,2 barg). La pression relative de liquide à l'entrée a été mesurée à 2,6 barg pour le dispositif d'injection selon la figure 1, soit une réduction d'un facteur de 3 à 4.

### Mesure de la taille des gouttelettes et de leur répartition

La taille moyenne des gouttelettes ainsi que leur répartition à la sortie des dispositifs d'injection ont été mesurées au moyen d'un granulomètre utilisant la technique de diffractométrie laser permettant la mesure :
- du diamètre d'un ensemble de particules sphériques ou non sphériques,
- la concentration spatiale en particules.

L'appareil utilisé est un granulomètre commercialisé par la société MALVERN utilisant un laser à gaz Hélium Néon d'une puissance de 4mW générant un faisceau de lumière rouge d'un diamètre de 10mm et d'une longueur d'onde de 632 nm. La lumière diffusée en avant par les particules est recueillie via une lentille de Fourier par une partie réceptrice, colinéaire au laser, comprenant un détecteur formé de photodiodes en silicium disposées en anneaux concentriques. Cette partie réceptrice enregistre la figure de diffraction issue de la traversée du jet de particules par le faisceau laser. La gamme de mesure du granulomètre utilisé couvre des tailles de 0,1 µm à 1000µm.

La figure 4 est une comparaison relative des performances d'un injecteur à impact selon l'état de la technique et d'un injecteur selon a figure 1. L'axe des ordonnées représente les valeurs de diamètre moyen des gouttelettes (valeur relative, unité arbitraire) mesurées à une distance de 300 mm de l'orifice de sortie parallèlement à l'axe d'évacuation (correspondant à la ligne axiale X de la figure 1), l'axe des abscisses représente une valeur relative de largeur de spray (ou d'angle de spray) (valeur relative, unité arbitraire) correspondant au rapport de la distance de mesure par rapport à l'axe d'évacuation dans une direction perpendiculaire à cet axe d'évacuation sur la largeur totale du spray. Autrement dit, la valeur 0,0 de l'axe des abscisses correspond à une mesure réalisée sur l'axe d'évacuation alors que la valeur 1,0 correspond à une mesure réalisée au niveau d'une largeur de spray maximale.

On constate que les sprays obtenus avec le dispositif d'injection selon la figure 1 et le dispositif d'injection à impact classique sont similaires et homogènes. La taille moyenne des gouttelettes est inférieure à 150 µm.

En conclusion, le dispositif d'injection selon l'invention permet d'obtenir un spray de gouttelettes similaire aux dispositifs d'injection à impact, mais avec une perte de charge considérablement réduite, permettant le traitement de charges lourdes sans avoir à utiliser des pompes puissantes ou une quantité de vapeur trop élevée.

## Revendications

1. Dispositif d'injection convenant à l'injection de charge d'hydrocarbures d'une unité de raffinage (10, 10') conformé pour atomiser un liquide en gouttelettes au moyen d'un gaz, comprenant un corps (12, 12') présentant :
- un orifice d'entrée (14, 14') de gaz destiné à être raccordé à un conduit d'alimentation d'un gaz,
- un orifice de sortie (18, 18') pour l'évacuation du liquide atomisé,
- une conduite interne (20, 20') rectiligne reliant l'orifice d'entrée (14, 14') à l'orifice de sortie (18, 18') suivant une direction axiale dudit corps,
**caractérisé en ce qu'**il comprend au moins deux conduits d'entrée de liquide (22, 24 ; 22', 24') destinés à être raccordés à au moins un conduit d'alimentation en liquide, lesdits conduits d'entrée de liquide (22, 24; 22', 24') traversant ledit corps (12, 12') radialement ou sensiblement radialement et débouchant à l'intérieur de ladite conduite interne (20, 20'), ces conduits d'entrée de liquide (22, 24; 22', 24') présentant chacun un axe (X₁, X₂ ; X'₁, X'₂) et étant agencés de sorte que leurs axes se coupent en un seul et même point (I, I') sur une ligne axiale (X, X') s'étendant à l'intérieur de la conduite interne (20, 20'), et **en ce que** les conduits d'entrée de liquide (22, 24 ; 22', 24') font saillie à l'intérieur de la conduite interne.

2. Dispositif d'injection (10, 10') selon la revendication 1, **caractérisé en ce que** ladite ligne axiale (X, X') forme un axe de symétrie dudit corps (12, 12').

3. Dispositif d'injection (10, 10') selon l'une quelconque des revendications 1 ou 2, **caractérisé en ce que** l'axe (X₁, X₂ ; X'₁, X'₂) de chaque conduit d'entrée de liquide (22, 24; 22', 24') s'étend perpendiculairement à la direction axiale dudit corps, notamment dans un même plan radial.

4. Dispositif d'injection (10, 10') selon l'une quelconque des revendications 1 à 3, **caractérisé en ce qu'**il comprend un nombre pair de conduits d'entrée de liquide (22, 24 ; 22', 24'), les conduits d'entrée étant appariés en paires, les axes de deux conduits d'une même paire s'étendant dans un même plan contenant la ligne axiale.

5. Dispositif d'injection (10, 10') selon l'une quelconque des revendications 1 à 3, **caractérisé en ce qu'**il comprend un nombre impair de conduits d'entrée de liquide.

6. Dispositif d'injection (10, 10') selon l'une quelconque des revendications 1 à 5, **caractérisé en ce que** tous les conduits d'entrée (22, 24 ; 22', 24') présentent une section de même surface.

7. Dispositif d'injection (10') selon l'une quelconque des revendications 1 à 6, **caractérisé en ce qu'**il comprend une chambre externe (30') au corps (12') et coaxiale avec celui-ci, agencée de sorte que lesdits conduits d'entrée de liquide (22', 24') soient en communication de fluide avec ladite chambre externe (30'), cette dernière étant reliée à au moins une conduite d'alimentation en liquide (25').

8. Dispositif d'injection (10') selon la revendication 7, **caractérisé en ce que** ladite au moins une conduite d'alimentation en liquide (25') s'étend perpendiculairement relativement à la ligne axiale X'.

9. Réacteur de traitement d'une charge d'hydrocarbures, notamment de craquage catalytique, comprenant au moins un dispositif d'injection (10, 10') selon l'une des revendications 1 à 8 disposé de sorte que son orifice de sortie (18, 18') débouche à l'intérieur dudit réacteur.

10. Procédé de craquage catalytique d'une charge d'hydrocarbures dans au moins un réacteur, dans lequel on injecte, de préférence en continu, ladite charge d'hydrocarbures à l'intérieur dudit au moins un réacteur, ladite charge d'hydrocarbures étant injectée par les conduits d'entrée de liquide d'au moins un dispositif d'injection (10, 10') selon l'une des revendications 1 à 8, un gaz alimentant simultanément chaque dispositif d'injection (10, 10') par l'orifice d'entrée de gaz (14, 14').

11. Procédé de craquage catalytique selon la revendication 10, dans chaque dispositif d'injection (10, 10'), dans lequel la proportion de gaz par rapport à la charge d'hydrocarbures est de 1,5 à 5% en poids, par exemple de 2 à 4% en poids.

12. Procédé de craquage catalytique selon la revendication 11, dans lequel les débits en charge d'hydrocarbures et en gaz alimentant chaque dispositif d'injection (10, 10') sont contrôlés de manière à obtenir un débit de charge d'hydrocarbures en sortie de chaque dispositif d'injection allant de 15 à 80t/h, de préférence de 40 à 60t/h.

## Patentansprüche

1. Injektionsvorrichtung, die zum Injizieren einer Kohlenwasserstoffcharge einer Raffiniereinheit (10, 10') geeignet ist, die ausgestaltet ist, um eine Flüssigkeit mittels eines Gases in Tröpfchen zu zerstäuben, die einen Körper (12, 12') umfasst, der Folgendes aufweist:
- eine Gaseingangsöffnung (14, 14'), die dazu bestimmt ist, an eine Versorgungsleitung eines Gases angeschlossen zu werden,
- eine Ausgangsöffnung (18, 18') zum Ableiten der zerstäubten Flüssigkeit,
- eine geradlinige interne Leitung (20, 20'), die die Eingangsöffnung (14, 14') mit der Ausgangsöffnung (18,18') entlang einer axialen Richtung des Körpers verbindet,
**dadurch gekennzeichnet, dass** sie auch mindestens zwei Flüssigkeitseingangsleitungen (22, 24; 22', 24') umfasst, die dazu bestimmt sind, an mindestens eine Flüssigkeitsversorgungsleitung angeschlossen zu werden, wobei die Flüssigkeitseingangsleitungen (22, 24; 22', 24') den Körper (12, 12') radial oder im Wesentlichen radial durchqueren und in das Innere der internen Leitung (20, 20') münden, wobei diese Flüssigkeitseingangsleitungen (22, 24; 22', 24') jeweils eine Achse (X₁, X₂; X'₁, X'₂) aufweisen und derart eingerichtet sind, dass sich ihre Achsen an einer einzigen Stelle (I, I') auf einer axialen Linie (X, X'), die sich in dem Inneren der internen Leitung (20,20') erstreckt, schneiden, und dass diese Flüssigkeitseingangsleitungen (22,24; 22', 24') in das Innere der internen Leitung vorragen.

2. Injektionsvorrichtung (10, 10') nach Anspruch 1, **dadurch gekennzeichnet, dass** die axiale Linie (X, X') eine Symmetrieachse des Körpers (12, 12') bildet.

3. Injektionsvorrichtung (10, 10') nach einem der Ansprüche 1 oder 2, **dadurch gekennzeichnet, dass** sich die Achse (X₁, X₂; X'₁, X'₂) jeder Flüssigkeitseingangsleitung (22, 24; 22', 24') senkrecht zu der axialen Richtung des Körpers, insbesondere in einer selben radialen Ebene erstreckt.

4. Injektionsvorrichtung (10, 10') nach einem der Ansprüche 1 bis 3, **dadurch gekennzeichnet, dass** sie eine gerade Anzahl von Flüssigkeitseingangsleitungen (22,24; 22', 24') umfasst, wobei die Eingangsleitungen in Paaren gepaart sind, wobei sich Achsen von zwei Leitungen ein und desselben Paars in einer selben Ebene, die die axiale Linie enthält, erstrecken.

5. Injektionsvorrichtung (10, 10') nach einem der Ansprüche 1 bis 3, **dadurch gekennzeichnet, dass** sie eine ungerade Anzahl von Flüssigkeitseingangsleitungen umfasst.

6. Injektionsvorrichtung (10, 10') nach einem der Ansprüche 1 bis 5, **dadurch gekennzeichnet, dass** alle Eingangsleitungen (22, 24; 22', 24') einen Querschnitt mit derselben Oberfläche aufweisen.

7. Injektionsvorrichtung (10') nach einem der Ansprüche 1 bis 6, **dadurch gekennzeichnet, dass** sie eine zu dem Körper (12') und mit diesem koaxiale Kammer (30') umfasst, die derart eingerichtet ist, dass die Flüssigkeitseingangsleitungen (22', 24') in Fluidkommunikation mit der externen Kammer (30') sind, wobei diese mit mindestens einer Flüssigkeitsversorgungsleitung (25') verbunden ist.

8. Injektionsvorrichtung (10') nach Anspruch 7, **dadurch gekennzeichnet, dass** sich die mindestens eine Flüssigkeitsversorgungsleitung (25') senkrecht zu der axialen Linie X' erstreckt.

9. Reaktor zur Behandlung einer Kohlenwasserstoffcharge, insbesondere mit katalytischem Cracken, der mindestens eine Injektionsvorrichtung (10, 10') nach einem der Ansprüche 1 bis 8 umfasst, die derart angeordnet ist, dass ihre Ausgangsöffnung (18, 18') in das Innere des Reaktors mündet.

10. Verfahren zum katalytischen Cracken einer Kohlenwasserstoffcharge in mindestens einem Reaktor, wobei die Kohlenwasserstoffcharge bevorzugt kontinuierlich in das Innere des mindestens eines Reaktors injiziert wird, wobei die Kohlenwasserstoffcharge durch die Flüssigkeitseingangsleitungen mindestens einer Injektionsvorrichtung (10, 10') nach einem der Ansprüche 1 bis 8 injiziert wird, wobei ein Gas gleichzeitig jede Injektionsvorrichtung (10, 10') durch die Gaseingangsöffnung (14, 14') versorgt.

11. Verfahren zum katalytischen Cracken nach Anspruch 10, wobei in jeder Injektionsvorrichtung (10, 10') das Gasverhältnis in Bezug auf die Kohlenwasserstoffcharge 1,5 bis 5 Gew.-% beträgt, zum Beispiel 2 bis 4 Gew.-% beträgt.

12. Verfahren zum katalytischen Cracken nach Anspruch 11, wobei die Durchsätze von Kohlenwasserstoffcharge und von Gas, die jede Injektionsvorrichtung (10, 10') versorgen, derart gesteuert werden, dass ein Kohlenwasserstoffdurchsatz am Ausgang jeder Injektionsvorrichtung von 15 bis 80 t/h, bevorzugt von 40 bis 60 t/h erhalten wird.

## Claims

1. An injection device suitable for injecting a hydrocarbon feedstock into a refining unit (10, 10') shaped in order to atomise a liquid into droplets by means of a gas, comprising a body (12, 12') having:
- a gas inlet orifice (14,14') to be connected to a gas supply duct,
- an outlet orifice (18, 18') for discharging the atomised liquid,
- a straight internal duct (20, 20') connecting the inlet orifice (14, 14') to the outlet orifice (18, 18') in an axial direction of said body,
**characterised in that** said injection device comprises at least two liquid inlet ducts (22, 24; 22',24') to be connected to at least one liquid supply duct, said liquid inlet ducts (22, 24; 22', 24') passing through said body (12, 12') radially or substantially radially and opening into said inner duct (20, 20'), these liquid inlet ducts (22, 24; 22', 24') each having an axis (X₁, X₂; X'₁, X'₂) and being arranged such that their axes intersect at one and the same point (I, I') on an axial line (X, X') extending inside the internal duct (20, 20'), and **in that** the liquid inlet ducts (22, 24'; 22', 24') protrude into the inner duct.

2. The injection device (10, 10') according to claim 1, **characterised in that** said axial line (X, X') forms an axis of symmetry of said body (12, 12').

3. The injection device (10, 10') according to any one of claims 1 or 2, **characterised in that** the axis (X₁, X₂; X'₁, X'₂) of each liquid inlet duct (22, 24; 22', 24') extends perpendicularly to the axial direction of said body, in particular in the same radial plane.

4. The injection device (10, 10') according to any one of claims 1 to 3, **characterised in that** it comprises an even number of liquid inlet ducts (22, 24; 22', 24'), the inlet ducts being arranged in pairs, the axis of two ducts of the same pair extending the same plane containing the axial line.

5. The injection device (10, 10') according to any one of claims 1 to 3, **characterised in that** it comprises an odd number of liquid inlet ducts.

6. The injection device (10, 10') according to any one of claims 1 to 5, **characterised in that** all of the inlet ducts (22, 24; 22', 24') have a cross-section of the same area.

7. The injection device (10') according to any one of claims 1 to 6, **characterised in that** it comprises a chamber (30') external to the body (12') and coaxial therewith, arranged so that said liquid inlet ducts (22', 24') are in fluid communication with said external chamber (30'), the latter being connected to at least one liquid supply duct (25').

8. The injection device (10') according to claim 7, **characterised in that** said at least one liquid supply duct (25') extends perpendicularly relative to the axial line X'.

9. A reactor for treating a hydrocarbon feedstock, in particular for catalytic cracking, comprising at least one injection device (10, 10') according to one of claims 1 to 8, arranged such that its outlet orifice (18, 18') opens into said reactor.

10. A method for catalytic cracking of a hydrocarbon feedstock in at least one reactor, wherein said hydrocarbon feedstock is injected, preferably continuously, into said at least one reactor, said hydrocarbon feedstock being injected via the liquid inlet ducts of at least one injection device (10, 10') according to any one of claims 1 to 8, a gas simultaneously supplying each injection device (10, 10') via the gas inlet orifice (14, 14').

11. The catalytic cracking method according to claim 10 in each injection device (10, 10') in which the proportion of gas with respect to the hydrocarbon feedstock is from 1.5 to 5% by weight, for example from 2 to 4% by weight.

12. The catalytic cracking method according to claim 11, in which the flow rates of hydrocarbon feedstock and of the gas supplying each injection device (10, 10') are controlled in such a way as to obtain a flow rate of hydrocarbon feedstock at the outlet of each injection device of between 15 and 80t/h, preferably between 40 and 60t/h.
